# EUROPEAN PATENT SPECIFICATION

(11) **EP 2 472 815 B1**
(45) Date of publication and mention of the grant of the patent: **06.03.2019**
(21) Application number: 10811210.3
(22) Date of filing: 28.07.2010
(51) Int. Cl.: H04L 29/06, H04L 12/917

(54) **USER ONLINE BANDWIDTH ADJUSTMENT METHOD AND REMOTE AUTHENTICATION DIAL-IN USER SERVICE SERVER**
VERFAHREN ZUR ONLINE-BENUTZERBANDBREITENEINSTELLUNG UND FÜR FERNAUTHENTIFIZIERUNGSWAHLEN IN EINEM BENUTZERDIENSTSERVER
PROCÉDÉ DE RÉGLAGE EN LIGNE DE LA LARGEUR DE BANDE D'UN UTILISATEUR ET SERVEUR DE SERVICE D'AUTHENTIFICATION DISTANTE D'UN UTILISATEUR APPELANT

(30) Priority: 24.08.2009 CN 200910091721
(43) Date of publication of application: 04.07.2012
(73) Proprietor: ZTE Corporation, Shenzhen, Guangdong 518057 (CN)
(72) Inventor: WU, Peidong, Guangdong 518057 (CN); PAN, Daqian, Guangdong 518057 (CN); DING, Bai, Guangdong 518057 (CN)
(74) Representative: Rapisardi, Mariacristina
(86) International application number: PCT/CN2010/075534
(87) International publication number: WO 2011/023050

(56) References cited:
- CN-A- 1 642 136
- CN-A- 101 309 204
- CN-A- 101 640 638
- US-A1- 2003 161 300
- US-A1- 2008 219 170
- TSCHOFENIG SIEMENS A MANKIN T TSENOV A LIOR BRIDGEWATER SYSTEMS J KORHONEN TELIASONERA H: "RADIUS Quality of Service Support; draft-tschofenig-radext-qos-05.txt", RADIUS QUALITY OF SERVICE SUPPORT; DRAFT-TSCHOFENIG-RADEXT-QOS-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 5, 5 March 2007 (2007-03-05), XP015050501,
- LIOR BRIDGEWATER SYSTEMS F ADRANGI INTEL P CONGDON C BLACK PROCURVE NETWORKING BUSINESS F BARI AT&T A: "Network Bandwidth Parameters for Remote Authentication Dial In User Service (RADIUS).; draft-lior-radius-bandwidth-capability-01. txt", NETWORK BANDWIDTH PARAMETERS FOR REMOTE AUTHENTICATION DIAL IN USER SERVICE (RADIUS).; DRAFT-LIOR-RADIUS-BANDWIDTH-CAPABILITY-01. TXT, INTERNET ENGINEERING TASK FORCE, IETF; STANDARDWORKINGDRAFT, INTERNET SOCIETY (ISOC) 4, RUE DES FALAISES CH- 1205 GE, no. 1, 17 July 2005 (2005-07-17), XP015040435,
- REN QINCHENG: "Research abd Design of Dynamic Bandwidth Adjustment System for Telecom", 1 May 2008 (2008-05-01), TH,, PAGE(S) 71PP, XP008169011, * page 26 - page 27 *
- REN QINCHENG RESEARCH AND DESIGN OF DYNAMIC BANDWIDTH ADJUSTMENT SYSTEM FOR TELECOM 17 September 2008, pages 26 - 27, XP008169011
- SONG SHIKUN TECHNOLOGY FOR DYNAMIC BANDWIDTH ALLOCATION IN ADSL BROADBAND ACCESS, MODERN SCIENCE & TECHNOLOGY OF TELECOMMUNICATIONS April 2010, pages 72 - 74, XP008152672

## Description

### Field of the Invention

The present invention belongs to the technical field of bandwidth access, and particularly relates to a user online bandwidth adjustment method and a remote authentication dial-in user server in an authentication system.

### Background of the Invention

In the current bandwidth services developed by the operators, generally the bandwidth limitation is passive for the user, i.e. during the user authentication stage, the uplink/downlink bandwidth information of the user is sent to an NAS (network access service) device in an authentication response package. Therefore, during the entire online stage of the user, the NAS device limits user bandwidth, and the user bandwidth will not be adjusted during the existence of the user session.

As the bandwidth is determined since the user logs in, the user cannot change it flexibly. However, during the practical network usage, the user often has different requirements for the network bandwidth for different applications. For example, when the user only browses web pages, the requirements of the user for the bandwidth is lower, and too high bandwidth setting causes resource waste. When the user wants to watch an online film, he tends to expect higher bandwidth.

During the implementation of the present invention, it is found that there are at least the following problems in the related art: in the current bandwidth allocation technology, since the bandwidth cannot be adjusted according to the practical requirements of the user, it causes that the requirement differentiation of these users cannot be met effectively.

The related IETF draft document "RADIUS Quality of Service Support" discloses an extension to the RADIUS protocol that performs authentication, authorization, and accounting for Quality-of-Service reservation: the related document ("Network Bandwidth Parameters for Remote Authentication Dial in User Service (RADIUS)") discloses bandwidth profile parameters and a protocol frame that enables an AAA server to specify the parameters that should be allocated by the access network for duration of an authorized user session: the related document ("Research and Design of Dynamic Bandwidth Adjustment System for Telecom") discloses dynamic bandwidth adjustment system for telecom: the related document (US7116682B1) discloses systems and methods for allocating network bandwidth.

### Summary of the Invention

In order to solve the above problem, an object of the present invention is to provide a method for a user to adjust bandwidth online and a remote authentication dial-in user server, which enables the user to adjust the bandwidth volume actively according to his own requirements and improves the comfortableness of the user in different network applications.

In order to achieve the above object, the present invention provides a method for a user to adjust bandwidth online, the method comprising:
Step A: a remote authentication dial-in user service (RADIUS) server receives a request message of changing a current bandwidth sent by a supplicant;
Step B: the RADIUS server acquires the bandwidth volume applied by the supplicant according to the request message of changing the current bandwidth and sends the bandwidth volume applied by the supplicant to a network access service (NAS) device; and
Step C: the RADIUS server sends a message that the bandwidth has been changed successfully to the supplicant after the NAS device completes the bandwidth configuration according to the bandwidth volume.

Preferably, before sending bandwidth volume applied by the supplicant to the NAS device, the method further comprises:
the RADIUS server calculating the application bandwidth weight of the supplicant according to a preset user level value of the supplicant and the bandwidth volume applied by the supplicant; and
if the application bandwidth weight of the supplicant is not greater than a preset bandwidth weight of the NAS device, then performing the step of sending the bandwidth volume applied by the supplicant to the NAS device.

Preferably, the method further comprises:
if the application bandwidth weight of the supplicant is greater than the preset bandwidth weight of the NAS device, then adjusting the bandwidth volume applied by the supplicant, and calculating the adjusted application bandwidth weight of the supplicant according to the preset user level value of the supplicant and the adjusted bandwidth volume applied by the supplicant; and
if the adjusted application bandwidth weight of the supplicant is not greater than the preset bandwidth weight of the NAS device, then sending the adjusted bandwidth volume applied by the supplicant to the NAS device.

Preferably, before performing step A, the method further comprises:
the RADIUS server authenticating an authentication request package received from the NAS device, with the authentication request package being generated for the NAS device based on login information submitted by the supplicant;
after the authentication request package passes authentication, the RADIUS server determining whether the NAS device accepts a preset initial bandwidth volume, with the preset initial bandwidth volume being used for setting an initial bandwidth when the supplicant logs in;
if yes, then the RADIUS server providing the preset initial bandwidth volume in an authentication response package and sending the authentication response package to the NAS device; and
otherwise, the RADIUS server adjusting the preset initial bandwidth volume until the adjusted initial bandwidth volume is accepted by the NAS device.

Preferably, the step of determining whether the NAS device accepts a preset initial bandwidth volume specifically comprises:
the RADIUS server calculating the application bandwidth weight of the supplicant according to a preset user level value of the supplicant and the preset initial bandwidth volume; and
determining whether the initial application bandwidth weight of the supplicant is not greater than the preset bandwidth weight of the NAS device.

Preferably, the method further comprises:
after the setting of the initial bandwidth when the supplicant logs in is completed, the RADIUS server receiving an accounting request package sent by the NAS device;
the RADIUS server carrying out the accounting setting of accessing the network according to the correspondence relationship between the preset bandwidth volume and the fee standards; and
after the accounting setting is completed, the RADIUS server sending an accounting response package to the NAS device.

Preferably, before performing step A, the method further comprises:
the RADIUS server setting the correspondence relationship between the bandwidth volume and the fee standards;
after performing step C, the method further comprises:
   the RADIUS server selecting a fee standard corresponding to the adjusted bandwidth volume for accounting according to the correspondence relationship between the bandwidth volume and the fee standards; and
   the RADIUS server calculating the fee before the bandwidth changes according to the fee standard corresponding to the bandwidth volume before being changed.

Preferably, before performing step A, the method further comprises:
the RADIUS server sending all the selectable bandwidth volumes corresponding to the supplicant in the NAS device to the supplicant.

Preferably, the request message of changing the current bandwidth is a request message of changing the current uplink bandwidth and/or a request message of changing the current downlink bandwidth.

The present invention further provides a remote authentication dial-in user server, comprising:
a request receiving module adapted for receiving a request message of changing a current bandwidth sent from a supplicant;
a bandwidth resource accepting module adapted for acquiring the bandwidth volume applied by the supplicant according to the request message of changing the current bandwidth and sending the bandwidth volume applied by the supplicant to a network access service (NAS) device; and
a response module adapted for sending a message that the bandwidth has been changed successfully to the supplicant after the NAS device completes the bandwidth configuration according to the bandwidth volume.

Preferably, the bandwidth resource accepting module includes:
a bandwidth weight calculating unit adapted for calculating the application bandwidth weight of the supplicant according to a preset user level value of the supplicant and the bandwidth volume applied by the supplicant;
a bandwidth weight comparing unit adapted for comparing whether the application bandwidth weight is greater than the preset bandwidth weight of the NAS device, and if yes, then triggering a bandwidth volume adjusting unit, otherwise sending the bandwidth volume applied by the supplicant to the NAS device; and
the bandwidth volume adjusting unit adapted for adjusting the bandwidth volume applied by the supplicant when the application bandwidth weight is greater than the bandwidth weight corresponding to the current bandwidth bearing value of the NAS device.

At least one of the technical solutions of the above technology has the following beneficial effects: first, a supplicant actively sends a request message of changing the current bandwidth, the RADIUS (remote authentication dial-in user server) sends the changed bandwidth volume to an NAS device according to this request message, and this NAS device configures the bandwidth according to the changed bandwidth volume so that the user can actively initialize bandwidth changing through client software, and the user does not need to be offline when changing the bandwidth. As compared to the commonly used method of allocating bandwidth to the user passively, the user has bigger initiative in the above technical solution and can rationally select the bandwidth according to his own requirements, which achieves the effects of comfortableness and economy. Furthermore, for the operators, the above technical solution can effectively improve user satisfaction and is advantageous for improving enterprise competitiveness and ARPU (average revenue per user) value.

### Brief Description of the Drawings

Fig. 1 is a flowchart I of a method for a user to adjust bandwidth online in the embodiments of the present invention;
Fig. 2 is a flowchart II of the method for a user to adjust bandwidth online in the embodiments of the present invention;

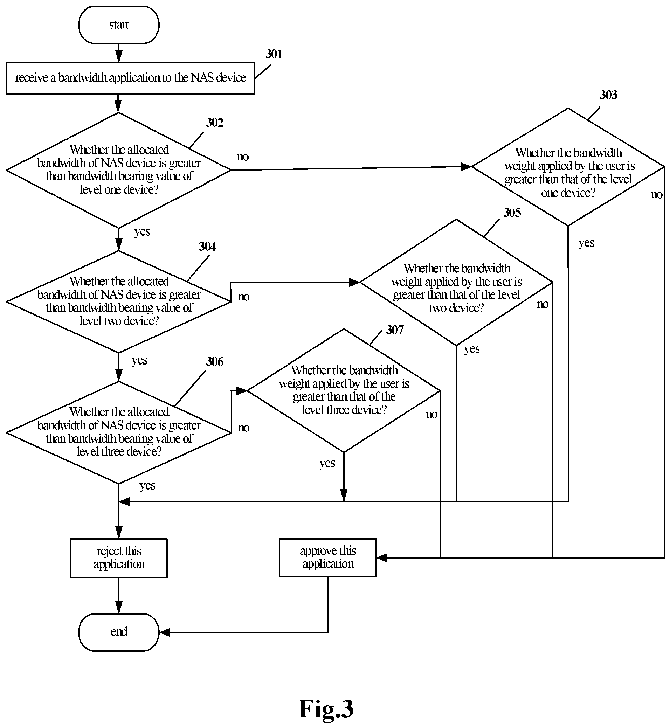

Fig. 3 is a flowchart of determining the bandwidth volume to accept in the embodiments of the present invention;
Fig. 4 is a flowchart of the method for a user to adjust bandwidth online applicable in an 802.1X authentication system in the embodiments of the present invention; and
Fig. 5 is a structural block diagram of a RADIUS server in the embodiments of the present invention.

### Detailed Description of Embodiments

For better understanding of the objects, technical solutions and advantages of the present invention, the embodiments of the present invention will be further described in detail hereinafter in conjunction with the embodiments and drawings. Here, the illustrative embodiments and description of the present invention are intended to explain the present invention but not to limit the present invention.

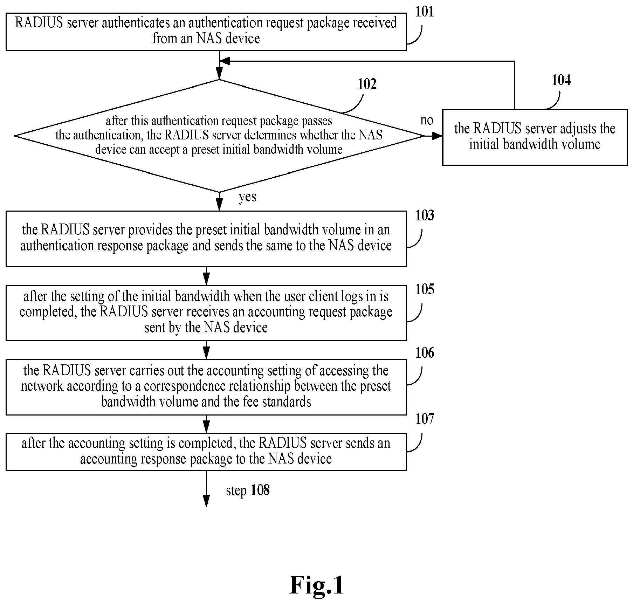

As shown in Fig. 1, it is a flowchart of a method for a user to adjust bandwidth online in the embodiments of the present invention, and the specific steps are as follows.

Step 101: a RADIUS server authenticates an authentication request package received from an NAS device.

The above authentication request package is generated by the NAS device based on the login information submitted by a supplicant. When the supplicant carries out login operation, this supplicant first sends the login information to the NAS device, and this login information can be username and password. Then the NAS device can generate an authentication request package according to the username and password and sends the same to the RADIUS server, and the RADIUS server authenticates this authentication request package. The authentication mode can be determining whether the username and password are correct, and when the username and password are correct, this authentication request package is authenticated.

Step 102: after this authentication request package passes the authentication, the RADIUS server determines whether the NAS device can accept a preset initial bandwidth volume, and if yes, then perform step 103; otherwise perform step 104.

In this step, whether the NAS device can accept the preset initial bandwidth volume can be determined by comparing the application bandwidth weight of the user and the preset bandwidth weight of the NAS device.

The above application bandwidth weight of the user can be calculated by using the following formula: application bandwidth weight of the user = user level value × preset initial bandwidth volume, wherein the values which can be assigned to the user level are: 1 (golden user), 2 (silver user), and 3 (bronze user). Of course, the values which can be assigned to the user level are not limited to these. The preset initial bandwidth volume can be set by the operators according to practical situations. The setting mode only needs to ensure that the user with higher level will preferentially obtain the bandwidth volume when applying for equal bandwidth volume, therefore, the specific value of the user level may be unlimited.

The above preset bandwidth weight of the NAS device is set by the operators according to operation experience. For example, a correspondence relationship between the NAS device and a plurality of bearer bandwidth values (including uplink and downlink) may be preset, and these bearer bandwidth values are set according to experience values (set by the operators according to operation experience). A plurality of levels can be set, and each level further sets the corresponding application bandwidth weight of the user. Thus whether to accept the bandwidth application can be determined for different situations.

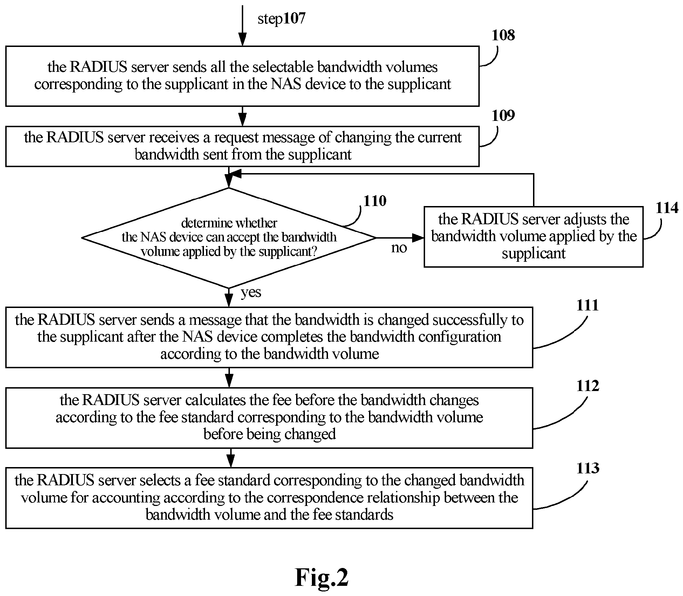

At this moment, the acceptance algorithm of determining the bandwidth volume to accept in this step is that: when the allocated bandwidth volume of one certain NAS device does not exceed a certain level of bandwidth bearing value, the application bandwidth weight of this user is limited not to be greater than a certain value; otherwise the applications will be rejected. Referring to Fig. 2, it is a flowchart of determining the bandwidth volume to accept in the embodiments of the present invention.

First, the following values can be preset: the bandwidth bearing value of level one device is 100 M, the bandwidth weight of level one device is 15; the bandwidth bearing value of level two device is 1000 M, the bandwidth weight of level two device is 10; the bandwidth bearing value of level three device is 10000 M, the bandwidth weight of level three device is 5. Of course, in this example it only needs to ensure that when applying for equal bandwidth volume, the user with higher level will obtain it preferentially, thus the specific values of the bandwidth weights of level one, level two, and level three devices are not limited.

Assuming that at this moment, the allocated bandwidth volume of this NAS device is up to 500 M, when an application for 10 M bandwidth initiated by silver user A is received (step 301), and when it is determined that the allocated bandwidth of the NAS device is greater than the bandwidth bearing value of the level one device but smaller than that of the level two device (steps 302 and 304), then determine whether the application bandwidth weight of the user is greater than that of the level two device (step 305).

It can be known from the above that the application bandwidth weight of this user = 2 (user level value of silver user) × 10 (bandwidth volume applied by the user) = 20. Since the calculated application bandwidth weight of the user (20) is greater than that of the level two device (10), this application can be rejected.

When the bandwidth application of the user is rejected, the bandwidth volume applied by the user can be adjusted (adjusting the applied bandwidth from 10 M to 5 M). The silver user A initiates a request of applying for 5 M bandwidth. At this moment, the adjusted application bandwidth weight of the user = 2 (user level value of silver user) × 5 (bandwidth volume applied by the user) = 10. Since the calculated application bandwidth weight of the user (10) is not greater than that of the level two device (10), this application can be approved.

Since the application bandwidth weight of the user includes the information about user level (such as user level value), it can be ensured that when the bandwidth resource is of shortage, the user with a higher level can apply for larger bandwidth volume.

Step 103: the RADIUS server sets the preset initial bandwidth volume in an authentication response package and sends the same to the NAS device, and then perform step 105.

The RADIUS server provides the initial bandwidth which can be accepted by the NAS device in the authentication response package, and then sends the same to the NAS device, and the NAS device completes the initial bandwidth setting when the supplicant logs in according to this initial bandwidth volume.

Of course, this authentication response package further includes the IP address of the RADIUS server and the UDP (user datagram protocol) port number for monitoring the supplicant. The IP address and port number can be provided in the replay-message attribute of the authentication response package and will finally be transparently transmitted to the supplicant.

In this step, this RADIUS server accumulates this initial bandwidth volume into the allocated bandwidth volume of the NAS device, and updates the records of the allocated bandwidth volume of the NAS device so that it can be used as the basis of whether to accept other supplicants.

Step 104: the RADIUS server adjusts the initial bandwidth volume, and then return to step 102.

When the NAS device does not accept the initial bandwidth volume, this RADIUS server needs to adjust the initial bandwidth volume, for example, selecting other smaller bandwidth volumes as the initial bandwidth volume, and then return to step 102;
Step 105: after the setting of the initial bandwidth when the supplicant logs in is completed, the RADIUS server receives an accounting request package sent by the NAS device.

Step 106: the RADIUS server carries out the accounting setting of accessing the network according to the correspondence relationship between the preset bandwidth volume and the fee standards;
In this embodiment, the correspondence relationship between preset bandwidth volume and the fee standards can be preset. Thus, the RADIUS server can select different fee standards for accounting according to different bandwidth settings so that the user can correspondingly change the fee after selecting different bandwidths according to his own application requirements. It can achieve the object of comfortableness and economy of network application. This method will also greatly increase market competitiveness of operators.

Step 107: after the accounting setting is completed, the RADIUS server sends an accounting response package to the NAS device.

By then, the authentication and accounting processing of the supplicant are completed, and the supplicant can access the network normally. Please continue to refer to Fig. 2.

Step 108: the RADIUS server sends all the selectable bandwidth volumes corresponding to the supplicant in the NAS device to the supplicant.

The supplicant can actively initiate an inquiry request toward the RADIUS server according to the IP address and UDP port number of the RADIUS server obtained by transparent transmission. When the RADIUS server authenticates that this inquiry request is valid, it can send all the selectable bandwidth volumes corresponding to the supplicant in the NAS device to the supplicant. When the user needs to adjust the bandwidth online, he can carry out the operation of changing bandwidth according to the selectable bandwidth volumes obtained in this step.

Step 109: the RADIUS server receives a request message of changing the current bandwidth sent from the supplicant.

When the supplicant needs to change the bandwidth, he can actively send a request message of changing the current bandwidth to the RADIUS server according to the IP address and UDP port number of the RADIUS server obtained by transparent transmission; and this request message of changing the current bandwidth can be a request message of changing the current uplink bandwidth and/or a request message of changing the current downlink bandwidth.

In this embodiment, the bandwidth volume after change can be directly set in this request message of changing the current bandwidth. For example, when the supplicant wants to apply for 5 M bandwidth, the bandwidth volume applied by the supplicant can be directly sent to the RADIUS server via the request message, and then the RADIUS server parses the bandwidth volume applied by the supplicant from this request message. Of course, the bandwidth volume applied by the supplicant can be sent to the RADIUS server by way of other manners. For example, the RADIUS server parses relevant information about the bandwidth volume after change from the request message and then inquires for the bandwidth volume applied by the supplicant from this information.

Step 110: the RADIUS server acquires the bandwidth volume applied by the supplicant according to the request message of changing the current bandwidth and determines whether the NAS device can accept the bandwidth volume applied by the supplicant, and if yes, then perform step 111, otherwise perform step 112.

First, the RADIUS server carries out determination of the validity of the request message of changing the current bandwidth. If it is a valid request message, then the manner of determining whether to accept the bandwidth in Fig. 2 can also be used to determine whether the NAS device can accept the bandwidth volume applied by the supplicant. If this NAS device can accept this bandwidth volume, then the RADIUS server sends the information about the new bandwidth to the NAS device via a dynamic authentication request package (CoA-Request), and the NAS device configures the bandwidth according to this changed bandwidth volume.

Step 111: the RADIUS server sends, to the supplicant, a message that the bandwidth is changed successfully after the NAS device completes the bandwidth configuration according to the changed bandwidth volume.

Step 112: the RADIUS server calculates the fee before the bandwidth changes according to the fee standard corresponding to the bandwidth volume before being changed.

Step 113: the RADIUS server selects a fee standard corresponding to the adjusted bandwidth volume for accounting according to the correspondence relationship between the bandwidth volume and the fee standards.

In steps 111 to 113, the NAS device carries out configuration according to the dynamic authentication package information. If it is successful, then it returns a dynamic authentication response package (CoA-Response) to the RADIUS server. After receiving this package, the RADIUS server provides a ticket according to the corresponding fee for the session before the bandwidth changes and modifies the user session information to restart from the change point, and the RADIUS server can also respond to the request message of the supplicant in step 109 and sends the result of the bandwidth changing to the supplicant. By then, the user completes a process of actively changing the bandwidth online.

When the supplicant goes offline, a ticket will be provided according to the corresponding fee standard and the bandwidth finally applied by the supplicant will be released so that the subsequent supplicants continue to apply.

Step 114: the RADIUS server adjusts the bandwidth volume applied by the supplicant; and then return to step 110.

When the NAS device does not accept the bandwidth volume applied by the supplicant, this RADIUS server needs to adjust the bandwidth volume, for example, selecting other smaller bandwidth volumes which are selectable by the supplicant as the bandwidth volume applied by the supplicant; and then return to step 110;
It can be known from the above technical solution that after a supplicant actively sends a request message of changing the current bandwidth, the RADIUS server sends the changed bandwidth volume to a NAS device according to this request message, and this NAS device configures the bandwidth according to the changed bandwidth so that the user can actively initialize bandwidth changing through client software, and the user does not need to be offline when changing the bandwidth. As compared to the commonly used method of allocating bandwidth to the user passively, the user has bigger initiative in the above technical solution and can rationally select the bandwidth according to his own requirements, which achieves the effects of comfortableness and economy. Furthermore, for the operators, the above technical solution can effectively improve user satisfaction and is advantageous for improving enterprise competitiveness and ARPU (average revenue per user) value.

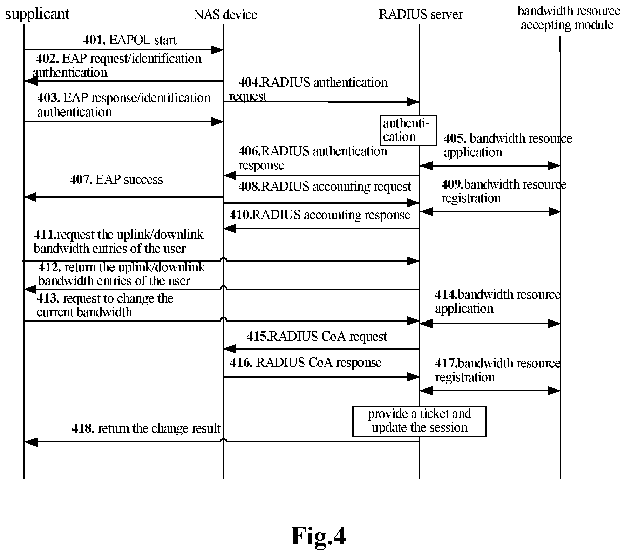

Hereinafter, 802.1X authentication will be taken as an example, and the flow of the user actively adjusting the bandwidth online will be further described in conjunction with Fig. 4, and the specific steps are as follows.

Steps 401-403: based on the 802.1X authentication mode, the authentication information is transferred between the client and the NAS device using the extensible Authentication Protocol over LAN (EAPoL).

By way of the interaction of steps 401-403, the NAS device can obtain the username and password submitted by the supplicant.

Step 404: the NAS device sends an authentication request package Access-Request to the RADIUS server.

Step 405: the RADIUS server carries out authentication processing after receiving the authentication request package.

First, this RADIUS server applies for bandwidth resource to the bandwidth resource management module by inquiring for the preset initial bandwidth volume.

For example, a user fee policy group can be preset in the bandwidth resource management module, which group includes a plurality of bandwidths selectable by the supplicant and fee standards corresponding to the plurality of bandwidths. In this step, if the application of bandwidth resource is successful, then a success message will be returned to the RADIUS server; if the application of bandwidth resource is unsuccessful, then lower uplink/downlink bandwidth will be selected from the fee policy group and the application will be carried out again until the application is successful, and if they are all unsuccessful, then the supplicant is rejected to be online.

Step 406: after the authentication and application of bandwidth resource are successful, the RADIUS server sends an authentication response package Access-Accept to the NAS device.

The above authentication response package includes uplink/downlink bandwidth information that the application of bandwidth resources is successful, IP address of the RADIUS server, and the UDP port number for the communication between the RADIUS server and supplicant, wherein the uplink/downlink bandwidth information can be used by the NAS device to complete the initial bandwidth setting when the supplicant logs in.

The above information can be saved in the form of TLV (TLV, i.e. type, length, and value), placed in the replay-message attribute and transparently transmitted to the supplicant.

Step 407: after receiving the authentication response package, the NAS device configures the initial uplink/downlink bandwidth and sends an EAP success package to the supplicant, and then the user authentication is successful.

Step 408: after the user authentication is successful, the NAS device will also actively initiate an accounting request package Account-Request to the RADIUS server.

Step 409: after receiving the accounting request package, the RADIUS server establishes a memory session for the user.

At this moment, the RADIUS server will also need to register to the bandwidth resource accepting module (the receiving of the accounting request package indicates that the initial bandwidth volume is sent successfully) and accumulate this initial bandwidth volume into the allocated bandwidth volume of the corresponding NAS device.

Step 410: the RADIUS server sends an accounting response package to the NAS device, after the authentication and accounting of the user are successful, the supplicant can access the network normally.

Step 411: the supplicant actively inquires for the RADIUS server using the IP address and UDP port number of the RADIUS server obtained through transparent transmission and obtains all the selectable uplink/downlink bandwidth entries in this user fee policy group.

Step 412: after authenticating that the user request is valid, the RADIUS server sends the uplink/downlink bandwidth entries selectable by the supplicant to the supplicant.

Step 413: when the supplicant wants to adjust the bandwidth online, the supplicant sends a request of changing bandwidth to the RADIUS server by using the IP address and UDP port number of the RADIUS server obtained through transparent transmission, and the request is also sent in the form of TLV.

Step 414: after obtaining the request of changing bandwidth, the RADIUS server first authenticates whether it is a valid request and then applies for bandwidth toward the bandwidth resource accepting module.

In this step, if the application is rejected, then the supplicant can send a request failure response to the supplicant. If the application is approved, then the subsequent steps will be performed;
Step 415: the RADIUS server fills the new uplink/downlink bandwidth information applied by the supplicant into a dynamic authentication request package (CoA-Request) according to the RFC3576 protocol and sends the same to the corresponding NAS device.

Step 416: the NAS device configures the bandwidth according to the bandwidth information in the dynamic authentication request package;
In this step, if the configuration of the NAS device is successful, then it sends a dynamic authentication response package (CoA-Response) to the RADIUS server. If the configuration of the NAS device is failed, then it sends a dynamic authentication failure package (CoA-Failure) to the RADIUS server, and after receiving the dynamic authentication failure package, the RADIUS server directly sends to the supplicant a message that the request of changing bandwidth is failed.

Step 417: the RADIUS server changes the registered bandwidth at the bandwidth resource accepting module;
If the RADIUS server receives the dynamic authentication response package (CoA-Response), then it indicates that the change is successful, and then the RADIUS server changes the registered bandwidth at the bandwidth resource accepting module. The main operation is to release the original bandwidth of the supplicant and to add the new applied bandwidth (which is mainly to update the corresponding allocated bandwidth volume of the NAS device).

In this step, the session information before changing the bandwidth can also be calculated and a ticket will be generated. The corresponding fee standard is the fee standard corresponding to the bandwidth volume before being changed. Of course, the starting time point of the updated user session is the bandwidth changing point, and the corresponding fee standard is the fee standard corresponding to the new bandwidth.

Step 418: the RADIUS server notifies the supplicant of the message that the bandwidth is changed successfully.

If the change of bandwidth is failed, then a message that the change is failed will be sent out. Of course, when the supplicant goes offline, it has to release the occupied bandwidth volume so that the subsequent users can continue to use it.

After the above steps, the change of current bandwidth by the user in the offline state can be achieved, which effectively meets the user requirements on network application. The user bandwidth and fee are associated, the user can rationally plan the bandwidth according to this own requirements. The object of comfortableness and economy of network application are achieved, and the operators can improve enterprise competitiveness and ARPU value by using this method, which is an approach to provide more humanized network access service.

In order to implement the above method embodiments, other embodiments of the present invention also provide a remote authentication dial-in user server. It needs to note that since the following embodiments are used for implementing the above method embodiments, the modules in this server are provided for implementing the steps of the above methods. However, the present invention is not limited to the following embodiments. Any server and module which can implement the above methods shall be covered in the scope of protection of the present invention. Furthermore, in the following description, those contents identical to the above methods are omitted here so as to save the length of this document.

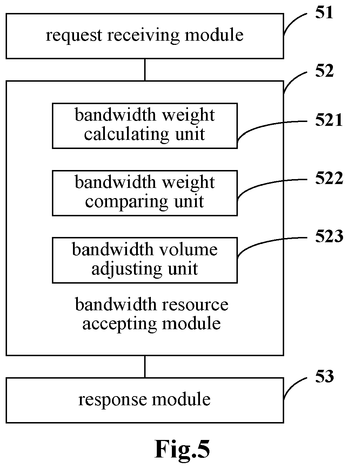

As shown in Fig. 5, it is a structural block diagram of a RADIUS server in the embodiments of the present invention, and it can be known from the figure that this RADIUS server comprises:
a request receiving module 51, adapted for receiving a request message of changing a current bandwidth sent from a supplicant;
a bandwidth resource accepting module 52, adapted for acquiring the bandwidth volume applied by the supplicant according to the request message of changing the current bandwidth and sending the bandwidth volume applied by the supplicant to an NAS device; and
a response module 53, adapted for sending a message that the bandwidth is changed successfully to the supplicant after the NAS device completes the bandwidth configuration according to the bandwidth volume.

In another embodiment of the present invention, the bandwidth resource accepting module 52 includes:
a bandwidth weight calculating unit 521, adapted for calculating the application bandwidth weight of the supplicant according to a preset user level value of the supplicant and the bandwidth volume applied by the supplicant;
a bandwidth weight comparing unit 522, adapted for comparing whether the application bandwidth weight is greater than the preset bandwidth weight of the NAS device, and if yes, then triggering a bandwidth volume adjusting unit, otherwise sending the bandwidth volume applied by the supplicant to the NAS device; and
the bandwidth volume adjusting unit 523, adapted for adjusting the bandwidth volume applied by the supplicant when the application bandwidth weight is greater than the bandwidth weight corresponding to the current bandwidth bearing value of the NAS device.

The foregoing is only the preferred embodiments of the present invention, and it should be noted that several improvements and modifications can also be made by those skilled in the art without departing from the principles of the present invention.

## Claims

1. A method for a user to adjust bandwidth online, wherein the method comprises:
Step A: a remote authentication dial-in user service, RADIUS, server receiving a request message of changing a current bandwidth sent from a supplicant (413);
Step B:the RADIUS server acquiring the bandwidth volume applied by the supplicant according to the request message of changing the current bandwidth and sending the bandwidth volume applied by the supplicant to a network access service, NAS, device (415); and
Step C:the RADIUS server sending a message that the bandwidth has been changed successfully to the supplicant after the NAS device completes the bandwidth configuration according to the bandwidth volume (418).

2. The method according to Claim 1, wherein, before sending the bandwidth volume applied by the supplicant to the NAS device, the method further comprises:
the RADIUS server calculating the application bandwidth weight of the supplicant according to a preset user level value of the supplicant and the bandwidth volume applied by the supplicant (110); and
if the application bandwidth weight of the supplicant is not greater than a preset bandwidth weight of the NAS device, then performing the step of sending the bandwidth volume applied by the supplicant to the NAS device (110).

3. The method according to Claim 2, wherein, the method further comprises:
if the application bandwidth weight of the supplicant is greater than the preset bandwidth weight of the NAS device, then adjusting the bandwidth volume applied by the supplicant, and calculating the adjusted application bandwidth weight of the supplicant according to the preset user level value of the supplicant and the adjusted bandwidth volume applied by the supplicant (114); and
if the adjusted application bandwidth weight of the supplicant is not greater than the preset bandwidth weight of the NAS device, then sending the adjusted bandwidth volume applied by the supplicant to the NAS device (114).

4. The method according to Claim 1, wherein, before performing step A, the method further comprises:
the RADIUS server authenticating an authentication request package received from the NAS device, with the authentication request package being generated for the NAS device based on login information submitted by the supplicant (101);
after the authentication request package passes authentication, the RADIUS server determining whether the NAS device accepts a preset initial bandwidth volume, with the preset initial bandwidth volume being used for setting an initial bandwidth when the supplicant logs in (102);
if yes, then the RADIUS server providing the preset initial bandwidth volume in an authentication response package and sending the authentication response package to the NAS device (103); and
otherwise, the RADIUS server adjusting the preset initial bandwidth volume until the adjusted initial bandwidth volume is accepted by the NAS device (104).

5. The method according to Claim 4, wherein, the determining whether the NAS device accepts a preset initial bandwidth volume comprises:
the RADIUS server calculating the application bandwidth weight of the supplicant according to a preset user level value of the supplicant and the preset initial bandwidth volume (102); and
determining whether the initial application bandwidth weight of the supplicant is not greater than the preset bandwidth weight of the NAS device (102).

6. The method according to Claim 4, wherein, said method further comprises:
after the setting of the initial bandwidth when the supplicant logs in is completed, the RADIUS server receiving an accounting request package sent by the NAS device (105);
the RADIUS server carrying out the accounting setting of accessing the network according to the correspondence relationship between the preset bandwidth volume and the fee standards (106); and
after the accounting setting is completed, the RADIUS server sending an accounting response package to the NAS device (107).

7. The method according to Claim 1, wherein, before performing step A, the method further comprises:
the RADIUS server setting the correspondence relationship between the bandwidth volume and the fee standards (102);
after performing step C, the method further comprises:
the RADIUS server selecting a fee standard corresponding to the changed bandwidth volume for accounting according to the correspondence relationship between the bandwidth volume and the fee standards (113); and
the RADIUS server calculating the fee before the bandwidth changes according to the fee standard corresponding to the bandwidth volume before being changed (112).

8. The method according to Claim 1, wherein, before performing step A, the method further comprises:
the RADIUS server sending all the selectable bandwidth volumes corresponding to the supplicant in the NAS device to the supplicant (108).

9. The method according to Claim 1, wherein, the request message of changing the current bandwidth is a request message of changing the current uplink bandwidth and/or a request message of changing the current downlink bandwidth (109).

10. A remote authentication dial-in user server comprising:
a request receiving module (51), adapted for receiving a request message of changing a current bandwidth sent from a supplicant;
a bandwidth resource accepting module (52), adapted for acquiring the bandwidth volume applied by the supplicant according to the request message of changing the current bandwidth and sending the bandwidth volume applied by the supplicant to a network access service, NAS, device; and
a response module (53), adapted for sending a message that the bandwidth has been changed successfully to the supplicant after the NAS device completes the bandwidth configuration according to the bandwidth volume.

11. The remote authentication dial-in user server according to Claim 10, wherein, the bandwidth resource accepting module comprises:
a bandwidth weight calculating unit (521), adapted for calculating the application bandwidth weight of the supplicant according to a preset user level value of the supplicant and the bandwidth volume applied by the supplicant; and
a bandwidth weight comparing unit (522), adapted for comparing whether the application bandwidth weight is greater than the preset bandwidth weight of the NAS device, and if yes, then triggering a bandwidth volume adjusting unit, otherwise sending the bandwidth volume applied by the supplicant to the NAS device; and
the bandwidth volume adjusting unit (523), adapted for adjusting the bandwidth volume applied by the supplicant when the application bandwidth weight is greater than the bandwidth weight corresponding to the current bandwidth bearing value of the NAS device.

## Patentansprüche

1. Verfahren zur Online-Benutzerbandbreiteneinstellung, wobei das Verfahren umfasst:
Schritt A: das Empfangen durch einen Fernauthentifizierungs-Einwahlbenutzerdienst-(RADIUS) -Server einer Anforderungsnachricht zum Ändern einer aktuellen Bandbreite, die von einem Antragsteller (413) gesendet wird;
Schritt B: das Erfassen durch den RADIUS-Server des vom Antragsteller nach der Anforderungsnachricht zum Ändern der aktuellen Bandbreite angelegten Bandbreitenvolumens und das Senden des vom Antragsteller angelegten Bandbreitenvolumens an eine Netzwerkzugangsdienst- (NAS) -Vorrichtung (415); und
Schritt C: das Senden durch den RADIUS-Server einer Nachricht, dass die Bandbreite erfolgreich an den Antragsteller geändert wurde, nachdem die NAS-Vorrichtung die Bandbreitenkonfiguration nach dem Bandbreitenvolumen (418) abgeschlossen hat.

2. Verfahren nach Anspruch 1, wobei das Verfahren ferner umfasst, bevor das Bandbreitenvolumen, das vom Antragsteller an die NAS-Vorrichtung angelegt wird, gesendet wird:
das Berechnen durch den RADIUS-Server des Anwendungsbandbreitengewichts des Antragstellers nach einem voreingestellten Benutzerebenenwert des Antragstellers und des von dem Antragsteller (110) angelegten Bandbreitenvolumens; und
wenn das Anwendungsbandbreitengewicht des Antragstellers nicht größer als ein voreingestelltes Bandbreitengewicht der NAS-Vorrichtung ist, dann das Ausführen des Schrittes zum Senden des vom Antragsteller angelegten Bandbreitenvolumens an die NAS-Vorrichtung (110).

3. Verfahren nach Anspruch 2, wobei das Verfahren ferner umfasst:
wenn das Anwendungsbandbreitengewicht des Antragstellers größer als das voreingestellte Bandbreitengewicht der NAS-Vorrichtung ist, dann das Einstellen des vom Antragsteller angelegten Bandbreitenvolumens und das Berechnen des eingestellten Anwendungsbandbreitengewichts des Antragstellers nach dem voreingestellten Benutzerebenenwert des Antragstellers und dem eingestellten Bandbreitenvolumen, das vom Antragsteller (114) angelegt wird; und
wenn das eingestellte Anwendungsbandbreitengewicht des Antragstellers nicht größer als das voreingestellte Bandbreitengewicht der NAS-Vorrichtung ist, dann das Senden des eingestellten Bandbreitenvolumens, das vom Antragsteller angelegt wird, an die NAS-Vorrichtung (114).

4. Verfahren nach Anspruch 1, wobei das Verfahren vor der Durchführung vom Schritt A ferner umfasst:
das Authentifizieren durch den RADIUS-Server eines von der NAS-Vorrichtung empfangenen Authentifizierungsanforderungspakets, wobei das Authentifizierungsanforderungspaket für die NAS-Vorrichtung basierend auf vom Antragsteller (101) übermittelten Anmeldeinformationen erzeugt wird;
nachdem das Authentifizierungsanforderungspaket die Authentifizierung bestanden hat, das Bestimmen durch den RADIUS-Server, ob die NAS-Vorrichtung ein voreingestelltes anfängliches Bandbreitenvolumen akzeptiert, wobei das voreingestellte anfängliche Bandbreitenvolumen zum Einstellen einer anfänglichen Bandbreite verwendet wird, wenn sich der Antragsteller anmeldet (102);
wenn ja, dann das Bereitstellen durch den RADIUS-Server des voreingestellten anfänglichen Bandbreitenvolumens in einem Authentifizierungsantwortpaket und das Senden des Authentifizierungsantwortpakets an die NAS-Vorrichtung (103); und
andernfalls, das Einstellen durch den RADIUS-Server des voreingestellten anfänglichen Bandbreitenvolumens, bis das eingestellte anfängliche Bandbreitenvolumen von der NAS-Vorrichtung (104) akzeptiert wird.

5. Verfahren nach Anspruch 4, wobei das Bestimmen, ob die NAS-Vorrichtung ein voreingestelltes anfängliches Bandbreitenvolumen akzeptiert, umfasst:
das Berechnen durch den RADIUS-Server des Anwendungsbandbreitengewichts des Antragstellers nach einem voreingestellten Benutzerebenenwert des Antragstellers und dem voreingestellten anfänglichen Bandbreitenvolumen (102); und
das Bestimmen, ob das anfängliche Anwendungsbandbreitengewicht des Antragstellers nicht größer als das voreingestellte Bandbreitengewicht der NAS-Vorrichtung (102) ist.

6. Verfahren nach Anspruch 4, wobei das Verfahren ferner umfasst:
nach dem Einstellen der anfänglichen Bandbreite, wenn die Anmeldung des Antragstellers abgeschlossen ist, das Empfangen durch den RADIUS-Server eines von der NAS-Vorrichtung (105) gesendeten Abrechnungsanforderungspakets;
das Durchführen durch den RADIUS-Server der Abrechnungseinstellung für den Netzzugang nach dem Korrespondenzverhältnis zwischen dem voreingestellten Bandbreitenvolumen und den Gebührenstandards (106); und
nachdem die Abrechnungseinstellung abgeschlossen ist, das Senden durch den RADIUS-Server eines Abrechnungsantwortpakets an die NAS-Vorrichtung (107).

7. Verfahren nach Anspruch 1, wobei das Verfahren vor der Durchführung vom Schritt A ferner umfasst:
das Einstellen durch den RADIUS-Server des Korrespondenzverhältnisses zwischen dem Bandbreitenvolumen und den Gebührenstandards (102);
nach Durchführung vom Schritt C umfasst das Verfahren ferner:
das Auswählen durch den RADIUS-Server eines dem geänderten Bandbreitenvolumen entsprechenden Gebührenstandards zur Abrechnung nach dem Korrespondenzverhältnis zwischen dem Bandbreitenvolumen und den Gebührenstandards (113); und
das Berechnen durch den RADIUS-Server der Gebühr, bevor sich die Bandbreite nach dem dem Bandbreitenvolumen entsprechenden Gebührenstandard ändert, bevor sie geändert wird (112).

8. Verfahren nach Anspruch 1, wobei das Verfahren vor der Durchführung vom Schritt A ferner umfasst:
das Senden durch den RADIUS-Server aller wählbaren Bandbreitenvolumina, die dem Antragsteller in der NAS-Vorrichtung entsprechen, an den Antragsteller (108).

9. Verfahren nach Anspruch 1, wobei die Anforderungsnachricht zum Ändern der aktuellen Bandbreite eine Anforderungsnachricht zum Ändern der aktuellen Uplinkbandbreite und/oder eine Anforderungsnachricht zum Ändern der aktuellen Downlinkbandbreite (109) ist.

10. Fernauthentifizierungs-Einwahlbenutzerserver, umfassend:
ein Anforderungsempfangsmodul (51), das zum Empfangen einer Anforderungsnachricht zum Ändern einer von einem Antragsteller gesendeten aktuellen Bandbreite ausgelegt ist;
ein Bandbreitenressourcenakzeptanzmodul (52), das zum Erfassen des Bandbreitenvolumens, das vom Antragsteller nach der Anforderungsnachricht zum Ändern der aktuellen Bandbreite angelegt wird, und zum Senden des Bandbreitenvolumens, das vom Antragsteller bereitgestellt wird, an eine Netzwerkzugangsdienst- (NAS) -Vorrichtung, ausgelegt ist; und
ein Antwortmodul (53), das zum Senden einer Nachricht ausgelegt ist, dass die Bandbreite erfolgreich an den Antragsteller geändert wurde, nachdem die NAS-Vorrichtung die Bandbreitenkonfiguration nach dem Bandbreitenvolumen abgeschlossen hat.

11. Fernauthentifizierungs-Einwahlbenutzerserver nach Anspruch 10, wobei das Bandbreitenressourcenakzeptanzmodul umfasst:
eine Bandbreitengewichtsberechnungseinheit (521), die zum Berechnen des Anwendungsbandbreitengewichts des Antragstellers nach einem voreingestellten Benutzerebenenwert des Antragstellers und des von dem Antragsteller angelegten Bandbreitenvolumens ausgelegt ist; und
eine Bandbreitengewichtsvergleichseinheit (522), die zum Vergleichen ausgelegt ist, ob das Anwendungsbandbreitengewicht größer als das voreingestellte Bandbreitengewicht der NAS-Vorrichtung ist, und wenn ja, dann Auslösen einer Bandbreiteneinstellungseinheit, andernfalls Senden des Bandbreitenvolumens, das vom Antragsteller angelegt wird, an die NAS-Vorrichtung; und
die Bandbreitenvolumeneinstellungseinheit (523), die zum Einstellen des Bandbreitenvolumens ausgelegt ist, das von dem Antragsteller angelegt wird, wenn das Bandbreitengewicht größer als das Bandbreitengewicht ist, das dem aktuellen Bandbreiten-Tragewert der NAS-Vorrichtung entspricht.

## Revendications

1. Procédé permettant à un utilisateur de régler en ligne la largeur de bande, dans lequel le procédé comprend :
étape A : un serveur de service d'authentification distante d'un utilisateur appelant (remote authentication dial-in user service - RADIUS) recevant un message de demande de modification d'une largeur de bande actuelle envoyée à partir d'un « supplicant » (413) ;
étape B : le serveur RADIUS acquérant le volume de la largeur de bande, appliqué par le « supplicant » selon le message de demande de modification de la largeur de bande actuelle, et envoyant le volume de largeur de bande appliqué par le « supplicant » à un dispositif (415) de service d'accès au réseau (network access service - NAS) ; et
étape C : le serveur RADIUS envoyant un message au « suppliquant » indiquant que la largeur de bande à été modifiée avec succès après que le dispositif NAS ait accompli la configuration de la largeur de bande selon le volume (418) de la largeur de bande.

2. Procédé selon la revendication 1, dans lequel avant l'envoi du volume de la largeur de bande appliqué par le « supplicant » au dispositif NAS, le procédé comprend de plus :
le serveur RADIUS calculant la pondération de la largeur de bande de l'application du « supplicant » selon une valeur du niveau utilisateur préétablie du « supplicant » et le volume de la largeur de bande appliqué par le « supplicant » (110) ; et
si la pondération de la largeur de bande de l'application du « supplicant » n'est pas supérieure à une pondération de largeur de bande préétablie du dispositif NAS, effectuer alors l'étape consistant à envoyer le volume de la largeur de bande appliqué par le « supplicant » au dispositif NAS (110).

3. Procédé selon la revendication 2, dans lequel le procédé comprend de plus :
si la pondération de la largeur de bande de l'application est supérieure à la pondération de la largeur de bande préétablie du dispositif NAS, effectuer alors le réglage du volume de la largeur de bande appliqué par le « supplicant » et calculer la pondération de la largeur de bande de l'application selon la valeur du niveau utilisateur préétablie du « supplicant » ainsi que le volume de la largeur de bande réglé par le « supplicant » (114) ; et
si la pondération de la largeur de bande de l'application réglée du « supplicant » n'est pas supérieure à la pondération de la largeur de bande préétablie du dispositif NAS, envoyer alors le volume de la largeur de bande appliqué par le « supplicant » au dispositif NAS (114).

4. Procédé selon la revendication 1, dans lequel, avant la réalisation de l'étape A, le procédé comprend de plus :
le serveur RADIUS authentifiant un paquet de demandes d'authentification reçu par le dispositif NAS, le paquet de demandes d'authentification étant généré pour le dispositif NAS sur la base d'une information de connexion soumise par le « supplicant » (101) ;
après que le paquet de demandes d'authentification a réussi l'authentification, le serveur RADIUS déterminant si le dispositif NAS accepte un volume de largeur de bande initial préétablie, le volume de largeur de bande initiale préétablie étant utilisé pour régler une largeur de bande initiale lorsque le « supplicant » se connecte (102) ;
dans l'affirmative, le serveur RADIUS fournissant le volume de largeur de bande initiale préétablie dans un paquet de réponses d'authentification et envoyant le paquet de réponses d'authentification au dispositif NAS (103) ; et
sinon, le serveur RADIUS réglant le volume de la largeur de bande initiale préétablie jusqu'à ce que le volume de largeur de bande initiale réglée soit accepté par le dispositif NAS (104).

5. Procédé selon la revendication 4, dans lequel la détermination ou non de l'acceptation d'un volume de largeur de bande initiale préétablie par le dispositif NAS comprend :
le serveur RADIUS calculant la pondération de la largeur de bande de l'application du « supplicant » selon la valeur du niveau utilisateur préétablie du « supplicant » et le volume (102) de la largeur de bande initiale préétablie ; et
déterminer si la pondération de la largeur de bande de l'application initiale du « supplicant » n'est pas supérieure à la pondération de la largeur de bande préétablie du dispositif NAS (102).

6. Procédé selon la revendication 4, dans lequel ledit procédé comprend de plus :
après avoir accompli le réglage de la largeur de bande initiale lorsque le « supplicant » se connecte, le serveur RADIUS recevant un paquet de demandes de comptabilisation envoyé par le dispositif NAS (105) ;
le serveur RADIUS effectuant le paramétrage de la comptabilisation d'accession au réseau selon la relation correspondante entre le volume de largeur de bande préétabli et les normes (106) de frais ; et
une fois le paramétrage de la comptabilisation terminé, le serveur RADIUS envoyant un paquet de réponses de comptabilisation au dispositif NAS (107) .

7. Procédé selon la revendication 1, dans lequel, avant la réalisation de l'étape A, le procédé comprend de plus :
le serveur RADIUS réglant la relation correspondante entre le volume de la largeur de bande et les normes (102) de frais ;
après avoir effectué l'étape C, le procédé comprend de plus :
le serveur RADIUS sélectant une norme de frais correspondant au volume de largeur de bande modifiée pour une comptabilisation selon la relation correspondante entre le volume de largeur de bande et les normes (113) de frais ; et
le serveur RADIUS calculant les frais avant que la largeur de bande ne se modifie selon la norme de frais correspondant au volume de largeur de bande avant sa modification (112).

8. Procédé selon la revendication 1, dans lequel, avant la réalisation de l'étape A, le procédé comprend de plus :
le serveur RADIUS envoyant l'ensemble des volumes de largeur de bande pouvant être sélectionnés correspondant au « supplicant » dans le dispositif NAS vers « supplicant » (108).

9. Procédé selon la revendication 1, dans lequel le message de demande de modification de la largeur de bande actuelle est un message de demande de modification de la largeur de bande en liaison montante actuelle et/ou un message de demande de modification de la largeur de bande en liaison descendante (109) actuelle.

10. Serveur d'authentification distante d'un utilisateur appelant comprenant :
un module de réception de demande (51), adapté pour recevoir un message de demande de modification d'une largeur de bande actuelle envoyée à partir d'un « supplicant » ;
un module d'acceptation (52) d'une ressource de largeur de bande adapté pour acquérir le volume de la largeur de bande, appliqué par le « supplicant » selon le message de demande indiquant la modification de la largeur de bande actuelle, et envoyer le volume de la largeur de bande appliqué par le « supplicant » à un dispositif de service d'accès au réseau (NAS) ; et
un module de réponse (53), adapté pour envoyer un message au « suppliquant » indiquant que la largeur de bande à été modifiée avec succès après que le dispositif NAS ait terminé la configuration de la largeur de bande selon le volume de la largeur de bande.

11. Serveur d'authentification distante d'un utilisateur appelant selon la revendication 10, dans lequel le module d'acceptation (52) d'une ressource de largeur de bande comprend :
une unité de calcul (521) de la pondération de la largeur de bande adaptée pour calculer la pondération de la largeur de bande de l'application du « supplicant » selon la valeur du niveau utilisateur préétablie du « supplicant » et le volume de la largeur de bande appliqué par le « supplicant » ; et
une unité de comparaison (522) de la pondération de la largeur de bande adaptée pour comparer si la pondération de la largeur de bande de l'application est supérieure à la pondération de la largeur de bande préétablie du dispositif NAS, et si c'est le cas, déclencher alors une unité de réglage de volume de largeur de bande, sinon envoyer le volume de largeur de bande appliqué par le « supplicant » au dispositif NAS ; et
une unité de réglage (523) du volume de largeur de bande adaptée pour régler le volume de largeur de bande appliqué par le « supplicant » lorsque la pondération de la largeur de bande de l'application est supérieure à la pondération de la largeur de bande correspondant à la valeur de portance de la largeur de bande actuelle du dispositif NAS.
